# EUROPEAN PATENT SPECIFICATION

(11) **EP 4 092 000 B1**
(45) Date of publication and mention of the grant of the patent: **16.04.2025**
(21) Application number: 21174157.4
(22) Date of filing: 17.05.2021
(51) Int. Cl.: C03C 10/00, C03C 3/091, C03C 8/24, C04B 37/00, C04B 37/02, H01M 8/0282

(54) **GLASS CERAMIC SEALING COMPOSITION**
GLASKERAMISCHE DICHTUNGSZUSAMMENSETZUNG
COMPOSITION D'ÉTANCHÉITÉ CÉRAMIQUE EN VERRE

(43) Date of publication of application: 23.11.2022
(73) Proprietor: Sunfire GmbH, 01237 Dresden (DE); Politecnico di Torino, 10129 Torino (IT)
(72) Inventor: Javed, Hassan, Dresden (DE); Smeacetto, Federico, Torino (IT); Herbrig, Kai, Dresden (DE); Walter, Christian, Dresden (DE)
(74) Representative: Hauck Patentanwaltspartnerschaft mbB

(56) References cited:
- DE-A1- 102010 050 867
- JP-A- H09 255 355
- US-B1- 6 532 769
- US-B2- 7 214 441
- JAVED HASSAN ET AL: "Design and characterization of novel glass-ceramic sealants for solid oxide electrolysis cell (SOEC) applications", INTERNATIONAL JOURNAL OF APPLIED CERAMIC TECHNOLOGY, vol. 15, no. 4, 13 March 2018 (2018-03-13), US, pages 999 - 1010, XP055861318, ISSN: 1546-542X, Retrieved from the Internet <URL:https://api.wiley.com/onlinelibrary/tdm/v1/articles/10.1111%2Fijac.12889> [retrieved on 20211116], DOI: 10.1111/ijac.12889
- CHEN JIALIN ET AL: "Tuning the interfacial reaction between CaO-SrO-Al2O3-B2O3-SiO2 sealing glass-ceramics and Cr-containing interconnect: Crystalline structure vs. glass structure", JOURNAL OF THE EUROPEAN CERAMIC SOCIETY, vol. 34, no. 8, 1 August 2014 (2014-08-01), AMSTERDAM, NL, pages 1989 - 1996, XP055861317, ISSN: 0955-2219, DOI: 10.1016/j.jeurceramsoc.2014.01.023

## Description

The present invention relates to glass-ceramic based material suitable to be used as a sealant in solid oxide cells (SOC), such as solid oxide fuel cells (SOFC) or solid oxide electrolysis cells (SOEC), especially as a solid-oxide-cell-glass-ceramic-sealing-composition.

SOC can either operate as a solid oxide fuel cell (SOFC) where they convert chemical energy into electrical energy by oxidizing a fuel or as a solid oxide electrolysis cell (SOEC) where they convert electrical energy into chemical energy by electrolysis of water (and/or carbon dioxide and/or hydrocarbons in a co-electrolysis process). SOC are typically operated in a temperature range of 700 - 1000 °C, whereas reactants and products of the chemical conversion process are present in gaseous state.

SOC comprise at least three essential ceramic components: two porous electrodes (i.e., a cathode and an anode) separated by a thin and dense electrolyte, together forming the membrane electrode assembly (MEA).

For practical applications, cells are connected in a series forming a stack, which requires additional components such as interconnects, frames, and sealants in order to enable the cells to perform in a series connection and to direct flow of reactant and product gases. The most common stack geometry is planar, wherein cells are placed one on top of each other, connected through the interconnects, most commonly made from ferritic stainless steel. Interconnects and frame elements are designed to comprise channels for directing the flow of reactant and product gases to and from the electrolyte, respectively, and separating anodic and cathodic compartments of a cell to prevent reactants and products from mixing.

The parts in contact with the ceramic electrodes provide for electrical connection between the cathode of a first cell and the anode of a second cell stacked on top of the first. Metallic interconnects may exhibit a protective metal oxide layer on their surface, preventing them from high-temperature corrosion, such as Chromium oxide.

Sealants used for joining the abovementioned components must provide for electrical insulation and gas tightness. To that end, sealants must have a good adhesion to adjoining elements and ensure stable bonds with ceramic and metallic components and avoid interactions leading to local changes of the sealant properties, causing cracks or delamination.

The selection of a suitable glass-ceramic composition as sealant material for SOC is driven by its coefficient of thermal expansion (CTE) and its transition temperature. The CTE must be compatible with that of the adjoining components to keep mechanical stresses resulting from different CTEs at an acceptable level and reduce risk of material failure and consequential leakage. Further, the formation of undesirable phases having a much lower or higher CTE than the remaining material must be avoided. The transition temperature must be close to the operating temperature of the stack to allow for the sealant to soften and provide for good adhesion and sufficient rigidity even at high temperatures.

Cells and stack components are subject to a variety of degradation mechanisms due exposure to reactants and high temperatures which may lead to undesirable phases being formed at the sealant/substrate interface which can lead to the local deterioration of sealant properties. Furthermore, some glass-ceramics undergo progressive crystallization at SOC operating temperatures, leading to changes in the residual glass composition.

In SOFC/SOEC applications, glass-ceramic based sealants are most commonly used due to their high thermal and chemical stability, high electrical resistivity, high flexibility in composition and low production cost. Such glass-ceramic sealants are typically developed by using different glass formers, glass modifiers and additives in an optimum concentration to obtain suitable thermal, electrical and thermo-mechanical properties.

Various studies have been carried out regarding the development of reliable glass-ceramic sealants. However, most of the glass-ceramics reported in literature show certain limitations, i.e., formation of undesirable crystalline phases with CTE considerably different from other SOFC/SOEC components, presence of high porosity, chemical reactivity with neighboring components, etc.

US 7,214,441 B2 discloses a glass ceramic sealant for solid oxide fuel cells. The sealing material in weight percent (wt%) is comprised of (i) 70 - 100 wt% glass frit and (ii) 30 - 0 wt% zirconia or leucite addition, wherein the glass frit comprises SiO₂ to 15 - 65 mol%, Li₂O to 0 - 5 mol%, Na₂O to 0 - 5 mol%, K₂O to 0 - 10 mol%, MgO to 0 - 5 mol%, CaO to 0 - 32 mol%, Al₂O₃ to 0 - 10 mol%, B₂O₃ to 0 - 50 mol%, SrO to 0 - 25 mol% and alkali metal oxide to <10 mol%. The glass-ceramics compositions may contain a relatively high concentration (up to 50 mol%) of B₂O₃ which is not suitable for high temperature SOFC/SOEC applications. A higher concentration of B₂O₃ results in its evaporation at high temperatures and therefore can adversely affect the sealant's properties. In literature, the evaporation of B₂O₃ is often reported as main source of increased porosity in glass-ceramic based sealants. The patent also discloses the glass-ceramics to comprise up to 10 mol% of Al₂O₃ which increases the possibility of formation of undesirable low-CTE phases such as SrAl₂Si₂O₈ or BaAl₂Si₂O₈ in case of SrO and BaO as main modifiers, respectively. The presence of low-CTE phases may introduce thermal stress leading to crack formation or delamination in particular during applied thermal cycles during operation. Furthermore, the patent discloses the glass-ceramics to comprise a total amount of alkali metal oxides of up to 10 mol%. Alkali metal oxides have a small ionic radius and can reduce the electrical resistivity of the glass, which is not desirable for SOFC/SOEC applications. Moreover, alkali metal oxides tend to be more chemically reactive, intruding the risk of undesired phases being formed at the sealant/substrate interface. Issues related to electrical resistivity and chemical reactivity become more critical for SOEC applications where applied voltages are higher than in typical SOFC applications. All the sealant compositions discussed in the patent have a much lower SrO content (≤25 mol%) as compared to the compositions according to the present invention. The higher SrO-content is required to form high-CTE Sr-containing crystalline phases such as SrSiO₃ and/or Sr₂SiO₄, which is important for the performance of the sealant according to the present invention, as the formation of a Sr-based crystalline phase minimizes the concentration of SrO in a residual glassy phase and consequently reduces the possibility of high-CTE SrCrO₄ formation in the presence of Chromium at the interconnects surface.

US 6,532,769 B1 discloses the following composition in mol%: M1 (BaO, SrO, CaO, and/or MgO) to 20 - 50 mol%, M2 (Al₂O₃) to 2 - 15 mol%, M3 (SiO₂ and B₂O₃) to 40 - 70 mol%. The glass-ceramic composition may have a high concentration of Al₂O₃ (up to 15 mol%), thus there is a high possibility for formation of low-CTE phases such as SrAl₂Si₂O₈ or BaAl₂Si₂O₈. Further, the composition comprises BaO, wherein the composition according to the present invention is preferably BaO-free thus to prevent the formation of a high-CTE BaCrO₄-phase in the presence of Chromium. Further, the composition according to the patent comprises less than 24 mol% of SrO, wherein the composition to the present invention comprises a much higher mol-percentage of SrO at 30 - 50 mol% with the advantages discussed in the previous paragraph. Further, the patent discloses compositions comprising up to 70 mol% of SiO₂. Such high concentration of SiO₂ can lead to the formation cristobalite (SiO₂) phase which is not desirable in SOFC/SOEC applications especially under thermal cyclic conditions due to the fact that cristobalite phase undergoes volume change around 250 °C and can lead to crack initiation. Alternatively, the composition may comprise an extremely high B₂O₃ content of up to 50 mol%, which is undesirable for high temperature applications because such concentrations can cause high porosity in the sealant.

Both patents discussed above do not provide information about the possible crystalline phases in glass-ceramics. Due to the presence of various components in a glass, it is difficult to control the type and relative qualities of formed crystalline phases. The formation of undesirable primary phase with very high or low coefficient of thermal expansion can disturb the composition of residual glass and thus can either minimize the chances of the formation of desired crystalline phase or its relative concentration. It can affect the overall CTE of the glass-ceramic.

In the publication Chen et.al., "Tuning the interfacial reaction between CaO-SrO-Al2O3-B2O3-SiO2 sealing glass-ceramics and Cr-containing interconnect: Crystalline structure vs. glass structure", Journal of the European Ceramic Socierty, Volume 34, Issue 8, August 2014, Pages 1989 - 1996 -different glass systems have been discussed which are of the following composition in mol%: SiO₂ to 36 - 40 mol%, CaO to 23 - 26 mol%, SrO to 23 - 26 mol%, Al₂O₃ to 0 - 8 mol%, B₂O₃ to 7 - 8 mol%. According to the reported results, the glass-ceramics had been investigated up to 500 hours at 700 °C, while no information is provided about the glass-ceramics behavior at higher temperatures typically above 800 °C. Some of the reported glass formed undesirable high CTE SrCrO₄ phase even at 700 °C, which can increase dramatically at high temperatures, such as in the range typicall for SOC operation. The glasses studied have a relatively low SiO₂ contents (max. up to 40 mol%), which can reduce the thermal stability of glass-ceramics at higher temperatures (typically above 800 °C). Further, the glasses comprise a lower SrO content and a much higher CaO content than composite according to the present invention.

In the publication Javed et.al., "Design and characterization of novel glass-ceramic sealants for SOEC applications", International Journal of Applied Ceramic Technology, 2018, 15:999-1010 which has been published by the inventors in 2018, three glass-ceramic compositions were described, which have been designed and characterized as sealant materials for solid oxide electrolysis cells (SOEC), having operating temperature of 850°C. The crystallization and the sintering behavior of the glasses are investigated by using differential thermal analysis (DTA) and heating stage microscopy (HSM) respectively. The glasses show glass transition temperatures of 715 - 740 °C, while the coefficients of thermal expansion (CTE) of 9.3 - 10.3 × 10⁻⁶ K⁻¹ (200 - 500 °C) are measured for the glass-ceramics, matching with the CTEs of the other cell components. The compatibility between the glass-ceramic sealants, the 3YSZ electrolyte and the Crofer22APU interconnect is examined by means of SEM and EDS, in the as-joined condition and after 1000 hours at 850 °C in air. Compositional changes in the glass-ceramic sealants are reviewed and discussed with respect to the formed crystalline phases before and after the aging treatment at 850 °C. All the compositions subject of the paper exhibited undesirable phases, limiting the sealant's durability under SOFC/SOEC conditions, which is a common problem faced in SiO₂-SrO based glass systems. As the formation of low-CTE phases, such as SrAl₂Si₂O₈, or the formation of a phases undergoing undesired volume expansion, such as the cristobalite phase, causes stress within the glass-ceramic sealant and consequently can lead to crack initiation, the results of the study were unsatisfactory.

Therefore, the object of the present invention is to present a glass ceramic sealing composition which is thermally and chemically stable for high temperature and long-term operations under SOFC/SOEC conditions and hence suitable for being used as a sealant in SOC applications.

A secondary object of the present invention is to present a glass ceramic sealing composition which is free from low-CTE phases, and comprises SrSiO₃ and/or Sr₂SiO₄ as main crystalline phases, with CTEs in the desired range of 10 - 11 × 10⁻⁶ K⁻¹.

Another object of this invention is to minimize the formation of a cristobalite phase (SiO₂).

The object is solved by the combination of features according to the claim 1.

The glass ceramic sealing-composition is characterized in that the composition is selected from the following components in mol%:

| | |
|---|---|
| - SiO₂ | 40 - 60 mol%, |
| - B₂O₃ | 3 - 12 mol%, |
| - SrO | 30 - 50 mol%, |
| - CaO | 1 - 12 mol%, |
| - MgO | 0 - 5 mol%, and |
| - Al₂O₃ | 1 - 6 mol%, |

wherein the total concentration of CaO and MgO and SrO is 30 - 70 mol% and wherein the total concentration of SiO₂ and B₂O₃ is 45 - 70 mol %.

According to the invention the composition has SrSiO3 and/or Sr2SiO4 as main crystalline phases in addition to a residual glassy phase after crystallisation at 800-1000°C. Such glass ceramic compositions are free from low CTE phases, and exhibit CTEs in the desired range of 10 - 11 × 10-6 K-1.

According to the invention a small amount of B₂O₃ with a minimum of 3 mol%, is added to improve the wettability of the glass ceramic sealing composition for better adhesion. However, with higher B₂O₃ concentration, the possible evaporation of boron can impart adverse effect. Therefore, the maximum concentration of B₂O₃ in the presented glass-ceramic is below 12 mol%. Further, according to the invention, the composition is alkali-metal-oxides-free so to eliminate the issues related to low electrical resistivity of alkali metal oxides respectively.

The glass ceramic sealing composition according to the present invention has a crystalline phase providing a desirable coefficient of thermal expansion for application as sealant material for SOC stacks and to ensure strong adhesion to other components. The formation of crystalline phases with undesirable coefficient of thermal expansion has been avoided by using suitable ratio between glass formers and modifiers. The sealant is thermally and chemically stable for high temperature and long-term operations under conditions typical for SOC stacks. The developed glass-ceramic sealing composition can be used to join ceramics-to-ceramics, ceramics-to-metals and metals-to-metals.

The described glass ceramic sealing composition is a Sr-SiO₂ based glass. In contrast to various state of art glass ceramics of the same family (Sr- SiO₂), the formation of high CTE SrCrO₄ in the presence of Chromium oxide at the sealants interface has been minimized, while the formation of the low CTE SrAl₂Si₂O₈ phase has been eliminated. These undesirable phases have either very high or very low coefficient of thermal expansions as compared with other SOC components, thus can lead to thermal stresses and eventual loss of adhesion / consequential leakage. Additionally, the glass ceramic sealing composition is chemically stable and does not undergo undesirable phase transitions even after ageing.

In one preferred embodiment the composition has 30 - 45 mol% of SrO.

The presence of Al₂O₃ mainly delays the crystallization process in glass ceramics and stabilizes the amorphous phase. However, higher Al₂O₃ contents can increase the possibility of formation of low CTE SrAl₂Si₂O₈ phase in SiO2-SrO based glass systems. For this purpose, the Al₂O₃ contents were restricted to maximum of 6 mol %.

The composition may contain Y₂O₃, La₂O₃, CeO₂, or Ga₂O₃ of up to 5 mol% or a combination thereof of up to 10 mol%. It has been found that rare earth metal oxides i.e. La₂O₃, Y₂O₃ etc. and Ga₂O₃ improve the CTE and wettability of glass ceramic. Therefore, the glass ceramic sealing composition may preferably contain a small concentration of one of these oxides or their combination.

According to a preferred embodiment, the composition is BaO-free and/or ZnO-free so to eliminate the issues related to the possible formation of undesirable high CTE BaCrO₄ phase.

BaO and SrO containing glass ceramics for SOC applications mainly suffer by the formation of BaCrO₄ or SrCrO₄ respectively. Both of these phases (BaCrO₄ or SrCrO₄) have a high CTE and adversely effects the sealing properties of glass-ceramic sealants. The glass ceramic sealing composition according to the present invention in one preferred embodiment is free of BaO, therefore, the formation of BaCrO₄ has been eliminated. On the other hand, the formation of SrCrO₄ has been minimized to a maximum up to 10% of the material, by optimizing the SrO/SiO₂ - ratio.

In one embodiment the glass ceramic sealing composition has a coefficient of thermal expansion of 8 - 14 x 10⁶ K⁻¹ and/or a coefficient of thermal expansion of 9 - 13 x 10⁻⁶ K⁻¹ after crystallization at 800 - 1000 °C. The glass ceramic according to the invention therefore has an excellent compatibility with metallic interconnect and ceramic electrolyte materials commonly used in SOC applications.

The composition has a SiO₂ -content of 40 - 60 mol% or specifically in the range of 45 - 58 mol%.

The composition has a SrO -content of 30 - 50 mol% or specifically below 43 mol%.

Furthermore, the composition specifically can have a SiO₂/SrO ratio of 0.9 - 1.9. For the glass ceramic composition according to the invention, the SiO₂/SrO ratio is preferably kept in the range of 0.9 - 1.9 in order to have desirable Sr-Silicate based phase and to avoid cristobalite phase, while maintaining the overall CTE of glass-ceramic in the range of 9-13 x 10⁻⁶ K⁻¹. By using a SiO₂/SrO ratio of 0.9-1.9, the cristobalite phase content has minimized to 0-5 weight%.

Undesirable phases were avoided by optimizing the SrO content and SiO₂/SrO - ratio of the composition.

The composition can have crystalline phases comprising of at least 50% of volume content of overall glass-ceramic.

In one embodiment the composition comprises SiO₂ and B₂O₃ in the range of 45 - 70 mol% in total, more preferably 50 - 65 mol% in total.

The composition can contain CaO up to 10 mol% and MgO below 3 mol%.

Furthermore, the composition may also have an overall concentration of CaO and MgO and SrO up to maximum of 55 mol%.

Moreover the composition can comprise of Y₂O₃ and/or La₂O₃ and/or CeO₂ and/or Ga₂O₃ or a combination thereof in the range of 0 - 10 mol%, more preferably in the range of 1 - 7 mol%.

The application of the glass ceramic sealing composition according to one of the preceding embodiments can be used for bonding of at least two SOFC or SOEC components.

The bonding can be established between ceramic-to-metal and/or ceramic-to-ceramic and/or metal-to-metal, such that the glass ceramic sealing compositionserves as a sealant and/or bonding agent in SOFC or SOEC.

In the following, the invention is further explained, whereby this is not necessarily restrictive but possibly restrictive.

As with BaO containing glass ceramic systems which allow for the formation of BaCrO₄, SrO containing glass ceramic systems can form a high CTE SrCrO₄ phase, however, the formation of SrCrO₄ seems to be kinetically slower than that BaCrO₄, probably due to a lower Gibbs free energy of the BaCrO₄ formation. Additionally, the volume content of the residual glassy phase and the corresponding Ba/Sr contents, can affect the formation of chromates (BaCrO₄ and SrCrO₄). High volume content of residual glass or a high concentration of Ba/Sr in the residual glass enhances the possibility of respective chromates formation. The glass ceramic composition according to the invention comprises > 50 vol% of crystalline phases, thus minimized the possibility of formation of SrCrO₄.

To act as an effective sealant, the glass ceramic composition should have a CTE in a suitable range and closely matching with joining components. In SOFC/SOEC, the glass ceramic sealant is mainly used to join steel interconnects and zirconia-based electrolytes having CTEs in the range of 10 - 13 x 10⁻⁶ K⁻¹. The CTE of the crystallized glass ceramic mainly depends on the crystalline phases formed in it. The formed crystalline phases should therefore also have an optimum CTE in the range of 9 - 13 x 10⁻⁶ K⁻¹ to obtain stable joints. The glass ceramic sealant composition has CTE in the range of 8 - 14 x 10⁻⁶ K⁻¹ and more specifically a CTE of 9 - 13 x 10⁻⁶ K⁻¹, and is thus suitable for SOFC/SOEC applications.

The addition of SrO improves the CTE and wettability of glass ceramics. Besides that, increasing the concentration of SrO in SiO₂ based glass ceramic systems, can lead to the formation of SrSiO₃ or Sr₂SiO₄ phases having CTEs of 10 - 11 x 10⁻⁶ K⁻¹. However, on the other hand, an excess of SrO can also lead to the formation of a high CTE SrCrO₄ phase due to chemical reaction between Cr contaminants originating from stainless steel alloys used for SOFC/SOEC interconnects and SrO from the glass ceramic. Therefore, it is necessary to have an optimum concentration of SrO.

Due to the presence of >50vol% of crystalline content, the glass ceramic sealant is thermally stable at high working temperatures of SOFC/SOEC. Moreover, the glass ceramic sealant has a high electrical resistivity (>10⁵ Ω.cm) in the temperature range of 800 - 950 °C, and is thus suitable for SOFC/SOEC applications.

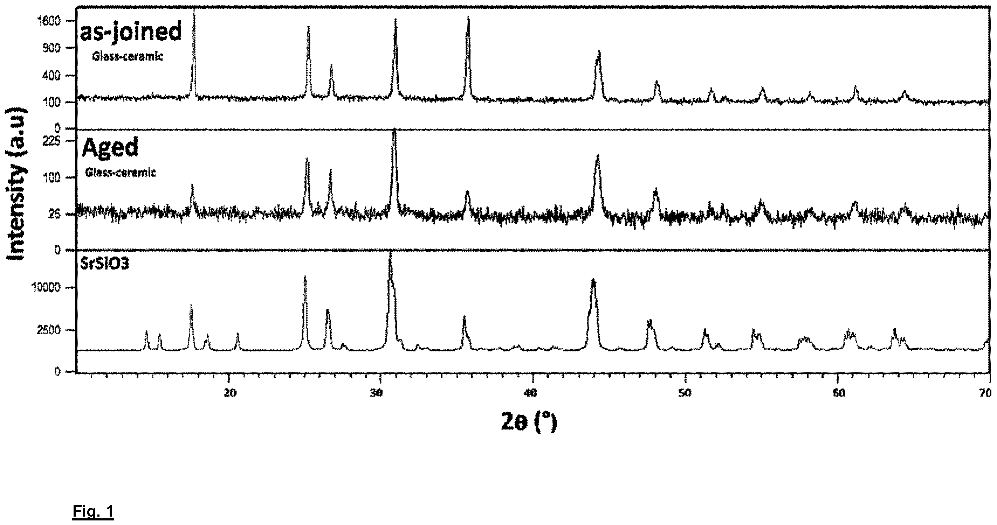

Figure 1, which is provided for explaining the invention, shows the XRD patterns of the as-joined and thermally aged glass ceramic sealant material after aging for >1000 hours in the temperature range of 800 - 950 °C. The XRD was carried out on the glass-ceramic in powder form. The XRD patterns of as-joined and thermally aged materials are similar to each other, thus indicate that the glass ceramic material is stable over time. Figure 1 also confirms that the glass ceramic sealant composition according to the invention only comprised one crystalline phase i.e. SrSiO₃, after joining and thermal ageing. Figure 1 also shows the XRD pattern of SrSiO₃ phase for better understanding.

## Claims

1. Glass ceramic sealing composition, **characterized in that** the composition is selected from the following components in mol%:
| | |
|---|---|
| - SiO₂ | 40 - 60 mol%, |
| - B₂O₃ | 3 - 12 mol%, |
| - SrO | 30 - 50 mol%, |
| - CaO | 1 - 12 mol%, |
| - MgO | 0 - 5 mol%, and |
| - Al₂O₃ | 1 - 6 mol%, and |
wherein the total concentration of CaO and MgO and SrO is 30 - 70 mol% and wherein the total concentration of SiO₂ and B₂O₃ is 45 - 70 mol %, wherein the composition is alkali-metal-oxide-free and the composition comprises SrSiO₃ and/or Sr₂SiO₄ as main crystalline phase(s) in addition to residual glassy phase after crystallization at 800 - 1000 °C.

2. Glass ceramic sealing composition according to claim 1, **characterized in that** the composition either comprises one of the components of Y₂O₃, La₂O₃, CeO₂, and Ga₂O₃ in a concentration of 0 - 5 mol% or a combination thereof in a total concentration of 0 - 10 mol%.

3. Glass ceramic sealing composition according to claim 1 or 2, **characterized in that** the composition is BaO-free and/or ZnO-free.

4. Glass ceramic sealing composition according to one of the preceding claims, **characterized in that** the composition has a coefficient of thermal expansion of 8 - 14 x 10⁻⁶ K⁻¹ preferably a coefficient of thermal expansion of 9 - 13 x 10⁻⁶ K⁻¹ after crystallization at 800 - 1000 °C.

5. Glass ceramic sealing composition according to one of the preceding claims, **characterized in that** the composition comprises a concentration of SiO₂ of 45 - 58 mol%.

6. Glass ceramic sealing composition according to one of the preceding claims, **characterized in that** the composition comprises a concentration of SrO of 30 - 45 mol%.

7. Glass ceramic sealing composition according to one of the preceding claims, **characterized in that** the composition comprises a SiO₂/SrO ratio of 0.9 - 1.9.

8. Glass ceramic sealing composition according to one of the preceding claims, **characterized in that** the composition's crystalline phases comprise at least 50% of volume content of the overall glass-ceramics after crystallization at 800 - 1000 °C.

9. Glass ceramic sealing composition according to one of the preceding claims, **characterized in that** the composition comprises a total concentration of SiO₂ and B₂O₃ of 50 - 65 mol%.

10. Glass ceramic sealing composition according to one of the preceding claims, **characterized in that** the composition comprises a concentration of CaO of 1 - 10 mol% and of MgO of 0 - 3 mol%.

11. Glass ceramic sealing composition according to one of the preceding claims, **characterized in that** the composition comprises a total concentration of CaO and MgO and SrO of up to a maximum of 55 mol%.

12. Glass ceramic sealing composition according to one of the preceding claims, **characterized in that** the composition either comprises one of the components of Y₂O₃, La₂O₃, CeO₂, and Ga₂O₃ in a concentration of 0 - 5 mol% or a combination thereof in a total concentration of 1 - 7 mol%.

13. Use of the glass ceramic sealing composition according to one of the preceding claims for the bonding of at least two SOFC or SOEC components.

14. Use of the glass ceramic sealing composition according to previous claim, **characterized in that** the bonding is established between a ceramic and a metallic component, two ceramic components or two metallic components.

## Patentansprüche

1. Glaskeramische Dichtungszusammensetzung, **dadurch gekennzeichnet, dass** die Zusammensetzung ausgewählt ist aus den folgenden Bestandteilen in Mol-%:
| | |
|---|---|
| - SiO₂ | 40-60 Mol-%, |
| - B₂O₃ | 3-12 Mol-%, |
| - SrO | 30-50 Mol-%, |
| - CaO | 1-12 Mol-%, |
| - MgO | 0-5 Mol-% und |
| - Al₂O₃ | 1-6 Mol-%, und |
wobei die Gesamtkonzentration von CaO und MgO und SrO 30-70 Mol-% beträgt, und wobei die Gesamtkonzentration von SiO₂ und B₂O₃ 45-70 Mol-% beträgt, wobei die Zusammensetzung alkalimetalloxidfrei ist und die Zusammensetzung SrSiO₃ und/oder Sr₂SiO₄ als Hauptkristallphase(n) zusätzlich zu einer Restglasphase nach Kristallisation bei 800-1000 °C umfasst.

2. Glaskeramische Dichtungszusammensetzung nach Anspruch 1, **dadurch gekennzeichnet, dass** die Zusammensetzung entweder einen der Bestandteile von Y₂O₃, La₂O₃, CeO₂ und Ga₂O₃ in einer Konzentration von 0-5 Mol-% oder eine Kombination davon in einer Gesamtkonzentration von 0-10 Mol-% umfasst.

3. Glaskeramische Dichtungszusammensetzung nach Anspruch 1 oder 2, **dadurch gekennzeichnet, dass** die Zusammensetzung BaO-frei und/oder ZnO-frei ist.

4. Glaskeramische Dichtungszusammensetzung nach einem der vorhergehenden Ansprüche, **dadurch gekennzeichnet, dass** die Zusammensetzung, nach Kristallisation bei 800-1000 °C, einen Wärmeausdehnungskoeffizienten von 8-14 × 10⁻⁶ K⁻¹, vorzugsweise einen Wärmeausdehnungskoeffizienten von 9-13 × 10⁻⁶, aufweist.

5. Glaskeramische Dichtungszusammensetzung nach einem der vorhergehenden Ansprüche, **dadurch gekennzeichnet, dass** die Zusammensetzung eine Konzentration von SiO₂ von 45-58 Mol-% umfasst.

6. Glaskeramische Dichtungszusammensetzung nach einem der vorhergehenden Ansprüche, **dadurch gekennzeichnet, dass** die Zusammensetzung eine Konzentration von SrO von 30-45 Mol-% umfasst.

7. Glaskeramische Dichtungszusammensetzung nach einem der vorhergehenden Ansprüche, **dadurch gekennzeichnet, dass** die Zusammensetzung ein SiO₂/SrO-Verhältnis von 0,9-1,9 umfasst.

8. Glaskeramische Dichtungszusammensetzung nach einem der vorhergehenden Ansprüche, **dadurch gekennzeichnet, dass** die Kristallphasen der Zusammensetzung nach Kristallisation bei 800-1000 °C ein Volumengehalt von mindestens 50 % der Glaskeramik insgesamt umfassen.

9. Glaskeramische Dichtungszusammensetzung nach einem der vorhergehenden Ansprüche, **dadurch gekennzeichnet, dass** die Zusammensetzung eine Gesamtkonzentration von SiO₂ und B₂O₃ von 50-65 Mol-% umfasst.

10. Glaskeramische Dichtungszusammensetzung nach einem der vorhergehenden Ansprüche, **dadurch gekennzeichnet, dass** die Zusammensetzung eine Konzentration von CaO von 1-10 Mol-% und von MgO von 0-3 Mol-% umfasst.

11. Glaskeramische Dichtungszusammensetzung nach einem der vorhergehenden Ansprüche, **dadurch gekennzeichnet, dass** die Zusammensetzung eine Gesamtkonzentration von CaO und MgO und SrO von bis zu einem Maximum von 55 Mol-% umfasst.

12. Glaskeramische Dichtungszusammensetzung nach einem der vorhergehenden Ansprüche, **dadurch gekennzeichnet, dass** die Zusammensetzung entweder einen der Bestandteile von Y₂O₃, La₂O₃, CeO₂ und Ga₂O₃ in einer Konzentration von 0-5 Mol-% oder eine Kombination davon in einer Gesamtkonzentration von 1-7 Mol-% umfasst.

13. Verwendung der glaskeramischen Dichtungszusammensetzung nach einem der vorhergehenden Ansprüche für die Verbindung von mindestens zwei SOFC- oder SOEC-Komponenten.

14. Verwendung der glaskeramischen Dichtungszusammensetzung nach dem vorhergehenden Anspruch, **dadurch gekennzeichnet, dass** die Verbindung zwischen einer keramischen und einer metallischen Komponente, zwei keramischen Komponenten oder zwei metallischen Komponenten hergestellt wird.

## Revendications

1. Composition d'étanchéité en vitrocéramique, **caractérisée en ce que** la composition est sélectionnée parmi les composants suivants en mol% :
| | |
|---|---|
| - SiO₂ | 40 - 60 mol%, |
| - B₂O₃ | 3 - 12 mol%, |
| - SrO | 30 - 50 mol%, |
| - CaO | 1 - 12 mol%, |
| - MgO | 0 - 5 mol%, et |
| - Al₂O₃ | 1 - 6 mol%, et |
dans laquelle la concentration totale de CaO et de MgO et de SrO est de 30 - 70 mol% et dans laquelle la concentration totale de SiO₂ et de B₂O₃ est de 45 - 70 mol%, dans laquelle la composition est exempte d'oxyde de métal alcalin et la composition comprend du SrSiO₃ et/ou du Sr₂SiO₄ en tant que phase(s) cristalline(s) principale(s) en plus d'une phase vitreuse résiduelle après cristallisation à 800 - 1000 °C.

2. Composition d'étanchéité en vitrocéramique selon la revendication 1, **caractérisée en ce que** la composition comprend soit l'un des composants parmi le Y₂O₃, le La₂O₃, le CeO₂ et le Ga₂O₃ dans une concentration de 0 - 5 mol% ou une combinaison de ceux-ci dans une concentration totale de 0 - 10 mol%.

3. Composition d'étanchéité en vitrocéramique selon la revendication 1 ou 2, **caractérisée en ce que** la composition est exempte de BaO et/ou exempte de ZnO.

4. Composition d'étanchéité en vitrocéramique selon l'une des revendications précédentes, **caractérisée en ce que** la composition présente un coefficient de dilatation thermique de 8 - 14 x 10⁻⁶ K⁻¹, de préférence un coefficient de dilatation thermique de 9 - 13 x 10⁻⁶, après cristallisation à 800 - 1000 °C.

5. Composition d'étanchéité en vitrocéramique selon l'une des revendications précédentes, **caractérisée en ce que** la composition comprend une concentration de SiO₂ de 45 - 58 mol%.

6. Composition d'étanchéité en vitrocéramique selon l'une des revendications précédentes, **caractérisée en ce que** la composition comprend une concentration de SrO de 30 - 45 mol%.

7. Composition d'étanchéité en vitrocéramique selon l'une des revendications précédentes, **caractérisée en ce que** la composition comprend un rapport SiO₂/SrO de 0,9 - 1,9.

8. Composition d'étanchéité en vitrocéramique selon l'une des revendications précédentes, **caractérisée en ce que** les phases cristallines de la composition comprennent au moins 50 % en teneur volumique des vitrocéramiques globales après cristallisation à 800 - 1000 °C.

9. Composition d'étanchéité en vitrocéramique selon l'une des revendications précédentes, **caractérisée en ce que** la composition comprend une concentration totale de SiO₂ et de B₂O₃ de 50 - 65 mol%.

10. Composition d'étanchéité en vitrocéramique selon l'une des revendications précédentes, **caractérisée en ce que** la composition comprend une concentration de CaO de 1 - 10 mol% et de MgO de 0 - 3 mol%.

11. Composition d'étanchéité en vitrocéramique selon l'une des revendications précédentes, **caractérisée en ce que** la composition comprend une concentration totale de CaO et de MgO et de SrO s'élevant jusqu'à un maximum de 55 mol%.

12. Composition d'étanchéité en vitrocéramique selon l'une des revendications précédentes, **caractérisée en ce que** la composition comprend soit l'un des composants parmi le Y₂O₃, le La₂O₃, le CeO₂ et le Ga₂O₃ dans une concentration de 0 - 5 mol% ou une combinaison de ceux-ci dans une concentration totale de 1 - 7 mol%.

13. Utilisation d'une composition d'étanchéité en vitrocéramique selon l'une des revendications précédentes destinée à lier au moins deux composants SOFC ou SOEC.

14. Utilisation d'une composition d'étanchéité en vitrocéramique selon la revendication précédente, **caractérisée en ce que** la liaison est établie entre un composant céramique et un composant métallique, deux composants céramiques ou deux composants métalliques.
